# EUROPÄISCHE PATENTANMELDUNG

(11) **EP 2 676 630 A1**
(43) Veröffentlichungstag der Anmeldung: **25.12.2013**
(21) Anmeldenummer: 12004723.8
(22) Anmeldetag: 23.06.2012
(51) Int. Cl.: A61C 8/00, A61C 9/00

(54) **Scanpfosten zur exakten Lagebestimmung eines herzustellenden Implantatzahnes**

(71) Anmelder: Böttcher, Robert, 99885 Ohrdruf (DE)
(72) Erfinder: Böttcher, Robert, 99885 Ohrdruf (DE)
(74) Vertreter: Späth, Volker

(57) **Zusammenfassung**

Die Erfindung betrifft einen Scanpfosten (1) zur exakten Lagebestimmung eines herzustellenden Implantatzahnes, zum Einsatz im Kiefer (2)eines Patienten oder eines Modellimplantates, wobei der Scanpfosten (1) eine Mehrzahl codierter Informationen aufweist, die mit einer Scaneinrichtung decodierbar sind, um auf der Basis dieser Informationen einen entsprechenden Implantatzahn z.B. mittels CAD/CAM-Technologie herzustellen. Der unterhalb am Scanpfostenkörper (4) angeformte Befestigungsabschnitt (5) ist umfangsseitig mehrflächig ausgebildet. Der Scanpfostenkörper (4) ist codiert durch
- eine an einem Abschnitt des oberen Randes ausgebildete Schräge (13), deren horizontale Länge durch einen variablen Abstand (a-b) definiert ist, wobei die mittige Höhe (h) der Schräge (13) bei jedem der Scanpfosten (1) immer konstant ist,
- die Höhe (H) des Scanpfostenkörpers (4),
- eine Ausrichtung (c-d), welche die Parallelität der Schräge (13) zu einer Fläche des mehrflächigen Befestigungsabschnittes (5) definiert,
- den Durchmesser (D) des Scanpfostenkörpers (4), der den Abstand der horizontalen Länge (a-b) der Schräge (13) bestimmt.

## Beschreibung

Die Erfindung bezieht sich auf einen Scanpfosten für klinische und labortechnische Bearbeitung zur exakten Lagebestimmung eines herzustellenden Implantatzahnes bzw. implantatgetragenem Zahnersatzes und zum Einsatz in einen im Kiefer eingesetzten Implantates, aufweisend einen Scanpfostenkörper, einen unterhalb daran an geformten Befestigungsabschnitt zum Verbinden des Scanpfostens mit dem Implantat mittels einer Befestigungsschraube, wobei der Scanpfosten eine Mehrzahl decodierbarer Informationen aufweist, die mit einer Scaneinrichtung decodierbar sind, um auf der Basis dieser Informationen einen entsprechenden Implantatzahn beispielsweise mittels CAD/CAM Technik herzustellen.

Aus der WO 2009/034463 ist ein Verfahren zur Positionierung eines Implantatanalogs in einem physischen Modell eines Patientenmundes bekannt, um das Analog (Gegenstück) des Implantatzahnes in ein physisches Modell zur Erstellung einer Zahnprothese einzusetzen. Dazu wird das physische Modell, das normalerweise auf einem Abdruck des Mundes des Patienten oder auf einem Scan des Mundes des Patienten basiert, hergestellt. Dann wird das Modell mittels Laserscantechnik, mechanischer oder fotografischer Scantechnik, CT-Scanning oder stereofotografischer Bildgebungstechnik gescannt. Dabei wird ein dreidimensionales Computermodell des physischen Modells erstellt und verwendet, um die Lage des Implantatzahnes zu bestimmen. Dann modifiziert ein Roboter das physische Modell, um eine Öffnung für das Implantatanalog zu schaffen. Danach platziert der Roboter das Implantatanalog innerhalb der Öffnung an der Stelle, die von dem dreidimensionalen Computermodell vorgegeben wurde.

Das Verfahren zur Positionierung eines Implantatanalogs in einem physischen Modell des Mundes eines Patienten dient somit der Herstellung eines maßgefertigten Abutments (Zwischenstückes), das auf dem Implantat befestigt wird und die Krone des Implantats hält.

Damit umfasst das Verfahren die Übertragung der Scandaten in ein CAD-Programm, die Generierung eines dreidimensionalen Modells von wenigstens einem Teil des physischen Modells im CAD-Programm unter Verwendung der Scandaten, die Bestimmung der Lage des in dem physischen Modell einzusetzenden Implantatanalogs in dem dreidimensionalen Modell, die Entwicklung der Positionsdaten für das Implantatanalog auf Basis der Lage des Implantatanalogs in dem dreidimensionalen Modell, die Entwicklung der Daten der Kontur des Entstehungsprofils, um die Kontur der Öffnung vorzusehen, die in das physische Modell eingebacht werden muss und die zu dem Implantatanalog führt, und die Übertragung der Positionsdaten des Implantatanalogs und der Daten der Kontur des Entstehungsprofils an einen Roboter. Der Roboter wird verwendet, um das physische Modell durch die Einbringung der Öffnung zu modifizieren, wobei die Öffnung ein Entstehungsprofil aufweist, das den Daten der Kontur des Entstehungsprofils entspricht, und um das Implantatanalog entsprechend den Positionsdaten des Implantatanalogs in der Öffnung des physischen Modells zu befestigen.

Hierbei entsteht eine Vielzahl von Abutments. Jedes Abutment umfasst einen Hauptkörper mit einem kreisförmigen Querschnitt, einen ersten sich verjüngenden Abschnitt unterhalb des Hauptkörpers, einen darunter ausgebildeten zweiten sich verjüngenden Abschnitt mit einem Innensechskant und weitere Dimensionen, die für die Replikation des Entstehungsprofils des Zahnersatzes notwendig sind.

Jedes Abutment weist Codierungen auf, die sich radial vom Mittelpunkt der Oberfläche des Abutments erstrecken, nämlich an den Stellen 3 Uhr, 6 Uhr, 9 Uhr und 12 Uhr. Darüber hinaus weisen die Abutments unterschiedliche Höhen auf, z.B. 3 mm, 4 mm, 6 mm und 8 mm, die wiederum zu unterschiedlichen Durchmessern der Sitzflächen, z.B. 3,4 mm, 4,1 mm, 5,0 mm und 6 mm, korrespondieren. Dementsprechend sind sechzehn einzigartige Gingivaformer vorhanden.

Es ist Aufgabe der Erfindung, einen Scanpfosten zur exakten Lagebestimmung eines herzustellenden Implantatzahnes der eingangs genannten Art zu schaffen, wodurch die Anzahl der erforderlichen Scanpfosten zur exakten Lagebestimmung von herzustellenden Implantatzähnen erheblich reduziert und somit der Aufwand und die Kosten für die Herstellung der Implantatzähne deutlich verringert werden kann.

Erfindungsgemäß wird die Aufgabe dadurch gelöst, dass der unterhalb am Scanpfostenkörper angeformte Befestigungsabschnitt zum Verbinden des Scanpfostens mit dem Implantat umfangsseitig mehrflächig ausgebildet ist, und dass der Scanpfostenkörper insbesondere codiert ist durch
- eine an einem Abschnitt des oberen Randes ausgebildete Schräge, deren horizontale Länge durch einen variablen Abstand definiert ist, wobei die mittige Höhe der Schräge bei jedem der Scanpfosten immer konstant ist,
- die Höhe des Scanpfostenkörpers,
- eine Ausrichtung, welche die Parallelität der Schräge zu einer Fläche des mehrflächigen Befestigungsabschnittes definiert,
- den Durchmesser des Scanpfostenkörpers, der den Abstand der horizontalen Länge der Schräge bestimmt.

Gemäß einer weiteren Ausgestaltung des erfindungsgemäßen Scanpfostens beträgt die mittige Höhe der Schräge immer vorzugsweise 1 mm.

Des weiteren ist vorgesehen, dass der unterhalb am Scanpfostenkörper angeformte mehrflächige Befestigungsabschnitt zum Verbinden des Scanpfostens mit dem Implantatfuß beispielsweise als 3-, 4-, 6- oder 8-kantiger Körper ausgebildet ist, wobei dieser Körper in ein entsprechendes Gegenstück des Implantats im Kiefer bzw. in einem zahntechnischen Modell oder nach Digitalisierung in einem virtuellen Modell einsetzbar ist.

Dieses Scanpfostensystem ermöglicht einen vollständig digitalen Ablauf ohne physische Abformung eines Patientenmundes und anschließender Modellherstellung zur Herstellung eines Implantatzahnes.

Lästige Abdrücke, Würgereize, Patientenunruhe und abformmaterialbedingte Abweichungen führen zu Paßungenauigkeiten des herzustellenden Implantatzahnes. Mit diesem System können diese Probleme ausgeschlossen werden.

Zur genauen Lageposition des Scanpfostens ist beim Einsetzen des Scanpfostens in das Implantat die Schräge am oberen Rand des Scanpfostenkörpers parallel zu einer vorbestimmten Fläche des mehrflächigen Befestigungsabschnittes ausgerichtet.

Ferner ist im unteren Bereich des Scanpfostenkörpers ein Durchbruchprofil für das Weichgewebe des Kiefers ausgebildet, welches in vertikaler Richtung nach außen gewölbt ist.

In den Knochen des Ober- oder Unterkiefers eines Patienten ist in die Lücke des entfernten ursprünglichen Zahns ein Implantat eingesetzt. Nachdem die Zeitdauer des Einwachsens des Implantates abgelaufen ist, scannt eine an sich bekannte Scaneinrichtung den Scanpfosten im Mund des Patienten und erfasst dabei die auf dem Scanpfosten befindlichen Codierungen. Auf dem Implantat wird der in Abhängigkeit vom herzustellenden Implantatzahn, z.B. Backenzahn, Schneidzahn, Eckzahn usw., ausgewählte Scanpfosten mit seinen individuellen Codierungen bzw. Abmessungen mittels einer Befestigungsschraube eingeschraubt. Die Besonderheit des Oberflächenmaterials des Scanpfostens ermöglicht die Erfassung durch alle Scantechnologien. An Hand des Scanergebnisses und der daraus erzielten Informationen wird errechnet, wie der spätere Zahnersatz bzw. der Implantatzahn aussehen muss, d.h. wie er dimensioniert ist, welche Form er besitzt und wie er im Kiefer positioniert ist. Der Scanpfosten dient lediglich der Definition der späteren exakten Position des Implantatzahnes. Der Scanpfosten ist damit ein Codeträger mit den entsprechenden Maßen, um den daraus herzustellenden Implantatzahn zu bestimmen und zu fertigen.

Die Scaneinrichtung liefert somit dem Herstellerlabor von Zahnprothesen die genauen Informationen wie der spätere Zahnersatz aussehen muss. Der entsprechende Implantatzahn wird dann beispielsweise mittels CAD/CAM-Technologie hergestellt. Diese Technologie ist in jedem Labor anwendbar und bedarf keiner speziellen Zentralfertigung.

Der Scanpfosten kann, je nach Wunsch, verschraubt mit dem Implantat im Kiefer verbleiben oder aus diesem entfernt werden. Der Scanpfosten definiert beim Verbleiben im Kiefer die Weichgewebskontur für den späteren Einsatz des Implantatzahnes. Der Durchmesser des Scanpfostenkörpers bestimmt den Abstand der horizontalen Länge der Schräge, da die mittige Höhe der Schräge bei jedem der Scanpfosten immer konstant ist und vorzugsweise 1 mm beträgt. Demgemäß unterscheiden sich die Durchmesser der Scanpfostenkörper immer durch den Abstand der horizontalen Länge der Schräge und sind dadurch auch erkennbar.

Der Scanpfostenkörper besitzt eine nach außen gewölbte, aber sich nach unten zum Befestigungsabschnitt hin verjüngende Außenkontur. Dieser untere verjüngte Bereich der Außenkontur liegt später im Weichgewebe, d.h. dem Zahnfleisch, im Bereich des späteren Implantatzahnes. Beim Einsetzen wird bereits mit dem Scanpfosten das Durchbruchsprofil für das Weichgewebe ausgeformt.

Weiterhin wird die Aufgabe der Erfindung auch durch ein Scanpfostensystem nach dem Oberbegriff des Anspruches 1 gelöst, bei dem eine Mehrzahl von Scanpfosten, vorzugsweise in sechs unterschiedlichen Varianten, d.h. mit unterschiedlichen individuellen Codierungen, vorgesehen sind, die in Abhängigkeit vom herzustellenden Implantatzahn, z.B. Backenzahn, Schneidzahn, Eckzahn usw., auswählbar sind.

Durch die erfindungsgemäße Lösung wird die Anzahl der erforderlichen Scanpfosten zur exakten Lagebestimmung von herzustellenden Implantatzähnen erheblich reduziert. Darüber hinaus werden der Aufwand und die Kosten für die Herstellung der Implantatzähne deutlich verringert.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Der der Erfindung zugrunde liegende Gedanke wird in der nachfolgenden Beschreibung anhand eines Ausführungsbeispieles, das in den Zeichnungen dargestellt ist, näher beschrieben. Es zeigen:
- Fig. 1: eine Seitenansicht eines erfindungsgemäßen Scanpfostens,
- Fig. 2: eine Schnittansicht des Scanpfostens entlang der Linie A-A gemäß Fig. 1,
- Fig. 3: eine Draufsicht des Scanpfostens gemäß Fig. 1,
- Fig. 4: eine Perspektivansicht des Scanpfostens,
- Fig. 5: eine Schnittansicht gemäß Fig. 2 mit einer Befestigungsschraube, und
- Fig. 6: eine Ansicht eines Teils des Kiefers eines Patienten.

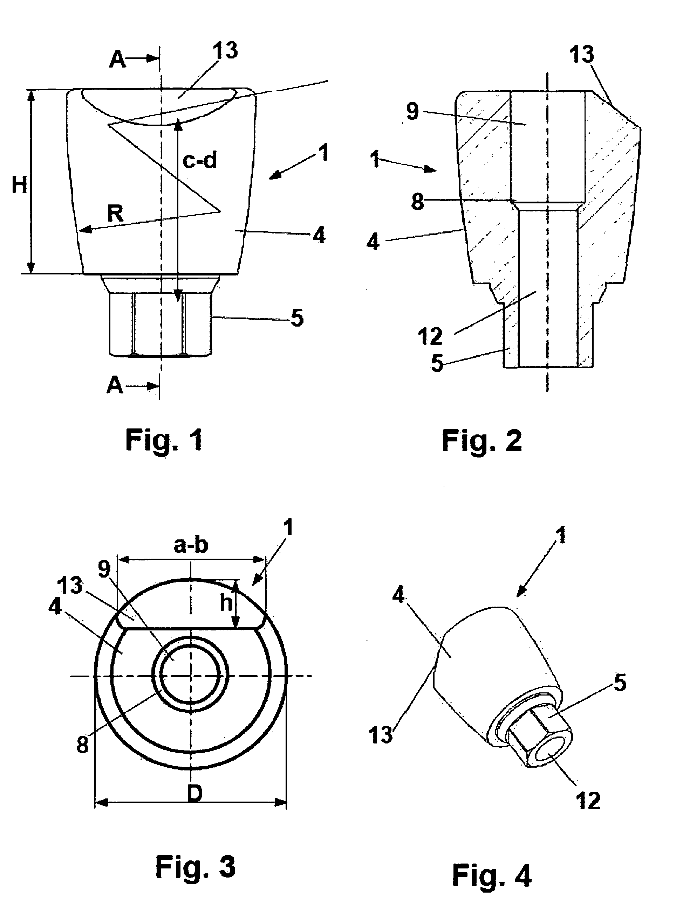

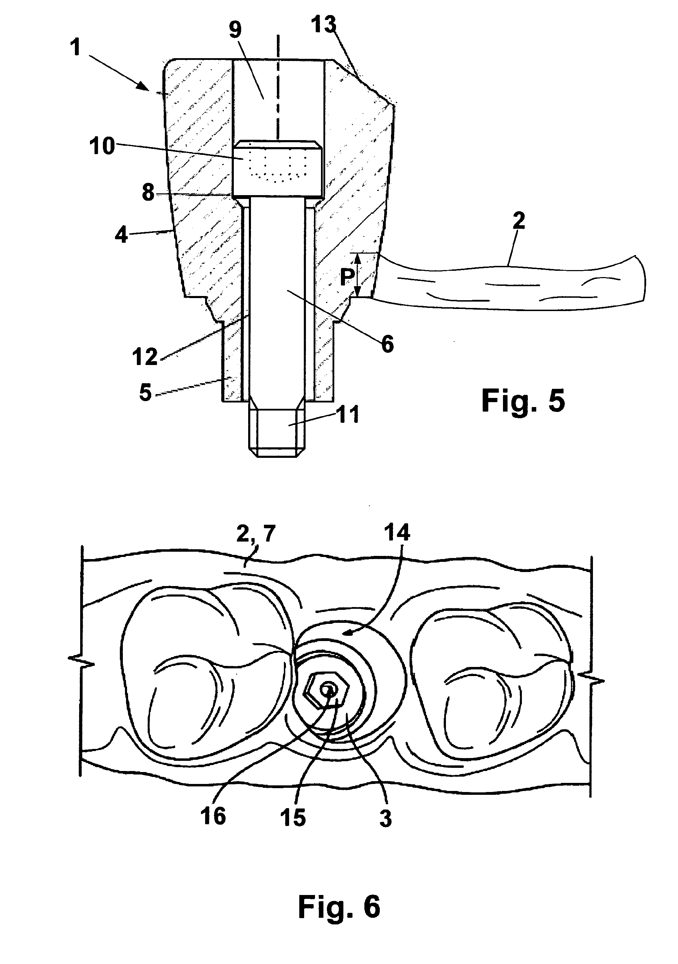

Der Scanpfosten 1 gemäß den Fig. 1 bis 5 ist vorgesehen für die klinische und labortechnische Bearbeitung zur exakten Lagebestimmung eines später herzustellenden Implantatzahnes und zum Einsatz in einem im Kiefer 2 eingesetzten Implantates 3 gemäß Fig. 6.

Der Scanpfosten 1 besteht im Wesentlichen aus einem Scankörper 4 und einem unterhalb an diesen angeformten Befestigungsabschnitt 5, der zum Verbinden des Scanpfostens 1 mit dem Implantat 3 mit einer in Fig. 5 dargestellten Befestigungsschraube 6 vorgesehen ist. Der Scanpfostenkörper 4 weist eine Außenwölbung auf, die durch den Radius R in Fig. 1 gekennzeichnet ist. Wie aus Fig. 5 ersichtlich ist, ist oim unteren Bereich des Scanpfostenkörpers 4 ein Durchbruchprofil P für das Weichgewebe 7 des Kiefers 2 ausgebildet.

Senkrecht durch den Scanpfosten 1 erstreckt sich eine mit einem Absatz 8 versehene Bohrung 9. Durch diese wird die Befestigungsschraube 6 hindurchgeführt, die vorzugsweise einen mit Innensechskant versehenen Schraubenkopf 10 und ein Außengewinde 11 aufweist.

Der unterhalb am Scanpfostenkörper 4 angeformte Befestigungsabschnitt 5 zum Verbinden des Scanpfostens 1 mit dem Implantat 3 im Kiefer 2 eines Patienten, oder mit den Modellimplantat eines physischen Modells, ist umfangsseitig mehrflächig ausgebildet, und zwar in diesem Ausführungsbeispiel als Sechskantkörper mit einer Bohrung 12, die eine Verlängerung der Bohrung 9 darstellt, durch welche sich die Befestigungsschraube 6 erstreckt. Weiterhin besitzt der Scanpfostenkörper 4 eine an einem Abschnitt des oberen Randes ausgebildete Schräge 13.

Der in Fig. 6 dargestellte Teil eines Kiefers 2 eines Patienten weist eine Öffnung 14 auf, in dem sich ursprünglich ein Zahn befand, der entfernt worden ist. In diese Öffnung 14 ist das Implantat 3 eingepflanzt. Dieser besitzt ein zum unterhalb am Scanpfostenkörper 4 angeformten Befestigungsabschnitt 5 kongruentes Gegenstück 15. Wenn also der Befestigungsabschnitt 5 am Scanpfostenkörper 4 als männlicher Sechskantkörper ausgebildet ist, so hat das Gegenstück 15 eine weibliche Sechskantform. In der Mitte des Gegenstückes 15 ist ein Innengewinde 16 eingebracht, in welche das Außengewinde 11 der Befestigungsschraube 6 eingeschraubt wird. Dies erfolgt mit einem nicht gezeigten Innensechskantschlüssel.

Der Scanpfosten 1 weist eine Mehrzahl codierter Informationen auf:

Die am Abschnitt des oberen Randes des Scanpfostens 1 ausgebildete Schräge 13 besitzt eine horizontale Länge, die durch einen variablen Abstand a-b gemäß Fig. 3 definiert ist. Dabei ist die mittige Höhe h der Schräge 13 bei jedem der Scanpfosten 1 immer konstant und beträgt vorzugsweise 1 mm.

Weiterhin besitzt der Scanpfostenkörper 4 eine Höhe H gemäß Fig. 1.

Ein weiterer Informationen liefernder Code ist die Ausrichtung c-d gemäß Fig. 1, welche die Parallelität der Schräge 13 zu einer Fläche des mehrflächigen Befestigungsabschnittes 5 definiert.

Darüber hinaus wird ein weiterer Code durch den Durchmesser D des Scanpfostenkörpers gemäß Fig. 3 gegeben, der an einer bestimmten Höhe den Abstand a-b, abhängig vom Implantatdurchmesser D, die horizontale Länge der Schräge 13 bestimmt.

**Liste der Bezugszeichen**

| | |
|---|---|
| 1 | Scanpfosten |
| 2 | Kiefer |
| 3 | Implantat |
| 4 | Scanpfostenkörper |
| 5 | Befestigungsabschnitt |
| 6 | Befestigungsschraube |
| 7 | Weichgewebe |
| 8 | Absatz |
| 9 | Bohrung im Scanpfostenkörper |
| 10 | Schraubenkopf |
| 11 | Außengewinde |
| 12 | Bohrung im Befestigungsabschnitt |
| 13 | Schräge |
| 14 | Öffnung im Kiefer |
| 15 | Gegenstück |
| 16 | Innengewinde |
| | |
| R | Radius der Wölbung am Scanpfostenkörper |
| P | Durchbruchprofil |
| h | Mittige Höhe der Schräge |
| a-b | Länge der Schräge |
| c-d | Ausrichtung der Schräge zum Befestigungsabschnitt |
| H | Höhe des Scanpfostenkörpers |
| D | Durchmesser des Scanpfostenkörpers |
| | |

## Patentansprüche

1. Scanpfosten für klinische und labortechnische Bearbeitung zur exakten Lagebestimmung eines herzustellenden Implantatzahnes und zum Einsatz in einem im Kiefer (2) eingesetzten Implantates (3), aufweisend einen Scanpfostenkörper (4), einen unterhalb daran angeformten Befestigungsabschnitt (5) zum Verbinden des Scanpfostens (1) mit dem Implantat (3) mittels einer Befestigungsschraube (6), wobei der Scanpfosten (1) eine Mehrzahl codierter Informationen aufweist, die mit einer Scaneinrichtung decodierbar sind, um auf der Basis dieser Informationen einen entsprechenden Implantatzahn beispielsweise mittels CAD/CAM-Technologie herzustellen, **dadurch gekennzeichnet, dass** der unterhalb am Scanpfostenkörper (4) angeformte Befestigungsabschnitt (5) zum Verbinden des Scanpfostens (1) mit dem Implantat (3) umfangsseitig mehrflächig ausgebildet ist, und dass der Scanpfostenkörper (4) insbesondere codiert ist durch
- eine an einem Abschnitt des oberen Randes ausgebildete Schräge (13), deren horizontale Länge durch einen variablen Abstand (a-b) definiert ist, wobei die mittige Höhe (h) der Schräge (13) bei jedem der Scanpfosten (1) immer konstant ist,
- die Höhe (H) des Scanpfostenkörpers (4),
- eine Ausrichtung (c-d), welche die Parallelität der Schräge (13) zu einer Fläche des mehrflächigen Befestigungsabschnittes (5) definiert,
- den Durchmesser (D) des Scanpfostenkörpers (4), der den Abstand der horizontalen Länge (a-b) der Schräge (13) bestimmt.

2. Scanpfosten nach Anspruch 1, **dadurch gekennzeichnet, dass** die mittige Höhe (h) der Schräge (13) immer vorzugsweise 1 mm beträgt.

3. Scanpfosten nach Anspruch 1 und 2, **dadurch gekennzeichnet, dass** der unterhalb am Scanpfostenkörper (4) angeformte mehrflächige Befestigungsabschnitt (5) zum Verbinden des Scanpfostens (1) mit dem Implantat (3) beispielsweise als 3-, 4-, 6- oder 8-kantiger Körper ausgebildet ist, wobei dieser Körper in ein entsprechendes Gegenstück des Implantats im Kiefer bzw. in einem zahntechnischen Modell oder nach Digitalisierung in einem virtuellen Modell einsetzbar ist.

4. Scanpfosten nach mindestens einem der Ansprüche 1 bis 3, **dadurch gekennzeichnet, dass** beim Einsetzen des Scanpfostens (1) in das Implantat (3) die Schräge (13) am oberen Rand des Scanpfostenkörpers (4) parallel zu einer vorbestimmten Fläche des mehrflächigen Befestigungsabschnittes (5) ausgerichtet ist.

5. Scanpfosten nach Anspruch 1, **dadurch gekennzeichnet, dass** im unteren Bereich des Scanpfostenkörpers (4) ein Durchbruchprofil (P) für das Weichgewebe (7) des Kiefers (2) ausgebildet ist, welches in vertikaler Richtung nach außen gewölbt ist.

6. Scanpfostensystem nach dem Oberbegriff des Anspruches 1, **dadurch gekennzeichnet, dass** eine Mehrzahl von Scanpfosten (1), vorzugsweise in 6 unterschiedlichen Varianten, d.h. mit unterschiedlichen individuellen Codierungen, vorgesehen sind, die in Abhängigkeit vom herzustellenden Implantatzahn, z.B. Backenzahn, Schneidzahn, Eckzahn usw., auswählbar sind.
